# EUROPÄISCHE PATENTSCHRIFT

(11) **EP 0 971 013 B1**
(45) Veröffentlichungstag und Bekanntmachung des Hinweises auf die Patenterteilung: **27.11.2002**
(21) Anmeldenummer: 99112666.5
(22) Anmeldetag: 02.07.1999
(51) Int. Cl.: C09K 5/00, F24J 2/46, F28F 19/00

(54) **Wärmeträger für Solaranlagen auf Basis von Alkylenglykolen**
Heat carrying medium for solar installations based on alkylene glycols
Liquide caloporteur pour installations solaires à base d'alkylene glycols

(30) Priorität: 08.07.1998 DE 19830493
(43) Veröffentlichungstag der Anmeldung: 12.01.2000
(73) Patentinhaber: Clariant GmbH, 65929 Frankfurt am Main (DE)
(72) Erfinder: Minks, Peter, 84503 Altötting (DE); Schuster, Johann, 84556 Kastl (DE); Pulletz, Knud, 84543 Winhöring (DE)

(56) Entgegenhaltungen:
- EP-A- 0 025 011
- DE-A- 19 525 090
- FR-A- 2 334 922

## Beschreibung

Die vorliegende Erfindung betrifft ein Mittel zum Transport von Wärme aus einem Solarabsorber in einen Wärmespeicher, das Alkylenglykole, Korrosionsinhibitoren und Wasser enthält.

Solarsysteme sind Anlagen, die in der Regel einen Solarabsorber zur Absorption der Sonnenwärme enthalten und durch einen Wärmeträger die gewonnene Wärme aus dem Solarabsorber in den Wärmetauscher eines Warmwassersystems zuführen. Im zunehmenden Maße werden zur effektiven Gewinnung von Sonnenenergie sogenannte Vakuumröhrenkollektoren eingesetzt. Durch die gute thermische Isolation wird dabei einerseits ein hoher Wirkungsgrad, andererseits eine sehr hohe Leerlauftemperatur erzielt, die im Stillstand der Anlage, wenn keine Wärme abgenommen wird, Werte bis zu + 260°C annehmen kann. Als Wärmeträger werden üblicherweise Glykole wie Ethylenglykol, vorzugsweise jedoch das untoxische 1,2-Propylenglykol mit entsprechenden Korrosionsinhibitoren eingesetzt

Bei Temperaturen über + 220°C kommt es auch unter Druck (üblich sind 2 - 4 bar) zu einem Verdampfen des Wassers und später der Glykole, wenn die Anlagen im Leerlauf sind. Danach kann es zur Auskristallisation der Korrosionsinhibitoren kommt. Der dabei entstehende salzartige Brei mit den Glykolresten kann sich speziell in den dünnen Röhren der Vakuumkollektoren ablagern und zu Verstopfungen durch Zersetzungsprodukte führen. Diese Ablagerungen können derartig hartnäckig sein, daß sie sich in einer frischen Solarflüssigkeit, aber auch in Wasser nicht mehr lösen lassen. Die Folge kann ein Ausfall der Anlage sein, was zum kostenaufwendigen Austausch der betroffenen Röhren führt.

Dieses Problem wurde bereits in DE-A-195 25 090 erkannt und zu lösen versucht. Es wurde eine Zugabe von 10 - 40, vorzugsweise 15 - 25 % eines höher molekularen Polyalkylenglykols in einem Massebereich 195 - 400 vorgeschlagen, der Rest ist 1,2-Propylenglykol, Ethylenglykol oder die Mischung beider Stoffe. Gemischt wird diese Basis mit Wasser in einem Mengenverhältnis von 40 - 70 Gew.-%, um die erforderlichen Frost- und Wärmeübertragungseigenschaften zu erreichen.

Es hat sich jedoch gezeigt, daß die Wärmeträger des Standes der Technik das Problem der Überhitzung von Solaranlagen nur ungenügend lösen können. Es kommt immer noch zur Zersetzung der Inhaltsstoffe mit den eingangs beschriebenen Konsequenzen.

Die Aufgabe bestand somit darin, einen Wärmeträger zu finden, dessen Siede- und Zersetzungsneigung noch geringer ist als die der Wärmeträger des Standes der Technik.

Überraschenderweise wurde gefunden, daß niedermolekulare Alkylenglykole eine hervorragende Eignung als Wärmeüberträger aufweisen.

Gegenstand der Erfindung ist ein Wärmeträgerkonzentrat für Solaranlagen, enthaltend
a) 45 bis 98 Gew.-% Triethylenglykol,
b) 1 bis 55 Gew.-% 1,2-Propylenglykol und/oder Ethylenglykol, und
c) 1 bis 6 Gew.-% Korrosionsinhibitoren.

Der Anteil an Triethylenglykol liegt vorzugsweise zwischen 50 und 95, insbesondere zwischen 60 und 90 Gew.-%. In einer weiteren bevorzugten Ausführungsform werden Mischungen aus Triethylenglykol und Tetraethylenglykol verwendet, wobei das Mischungsverhältnis vorzugsweise zwischen 3:1 und 1:3 liegt.

Der Anteil an 1,2-Propylenglykol und/oder Ethylenglykol liegt vorzugsweise zwischen 10 und 45, insbesondere zwischen 15 und 30 Gew.-%. In einer weiteren bevorzugten Ausführungsform werden auch hier Mischungen dieser Stoffe verwendet.

Aus dieser Grundmischung mit Korrosionsinhibitoren kann der gebrauchsfertige Wärmeträger durch Zumischen von 30 bis 60 Gew.-%, vorzugsweise von 45 bis 55 Gew.-% Wasser, bezogen auf das Gewicht der wasserhaltigen Abmischung, hergestellt werden. Eine besonders bevorzugte Ausführungsform der Erfindung sind Abmischungen, die folgende Komponenten enthalten:
a) 25 bis 30 Gew.-% Triethylenglycol
b) 20 bis 25 Gew.-% 1,2-Propylenglykol,
c) 1 bis 1,5 Gew.-% Korrosionsinhibitoren, und
d) 45 bis 55 Gew.-% Wasser.

Aus Korrosionsschutzgründen werden im Wärmeträger Korrosionsinhibitoren wie beispielsweise Borate, Silikate, Mono- und Dicarbonsäuren, Natriumbenzoat, Benzo- bzw. Tolyltriazole, Natrium bzw. Kaliumnitrit und -nitrat sowie weitere, literaturbekannte Inhibitoren verwendet. Vorzugsweise beträgt der Geahlt an Korrosionsinhibitoren 2 bis 4 Gew.-%, bezogen auf die wasserfreie Grundmischung.

Weitere Einzelheiten dieser Erfindung können aus folgenden Beispielen entnommen werden.

### Beispiel 1

Der erfindungsgemäße gebrauchsfertige Wärmeträger besteht aus folgenden Komponenten:
a) 20,0 Gew.-% 1,2-Propylenglykol
b) 25,0 Gew.-% Triethylenglykol
c) 1,4 Gew.-% Korrosionsinhibitoren
d) Rest auf 100 % VE-Wasser (VE = vollentsalzt)

Der gebrauchsfertige Wärmeträger weist folgende Kenndaten auf:
Stockpunkt: -33°C,
Viskosität bei 20°C: 7,5 mm²/sek.

Die Flüssigkeit wurde in einem Destillationstest auf das Temperaturverhalten geprüft. Dazu wurden 400 g des Wärmeträgers in einen Rundkolben gebracht und mittels eines Heizbades (Temperatur = +260°C) zum Trocknen destilliert. Der Rückstand wurde 48 Stunden bei dieser Temperatur belassen und nach Abkühlen wie folgt beurteilt:
- Aussehen dunkle, leicht trübe Flüssigkeit
- Menge des Rückstandes 108 g (27 Gew.-%)
- Viskosität 142 mm²/s
- Löslichkeit im Glykol-Wassergemisch löslich, mit leichter Trübung

### Vergleichsbeispiel 1a

Ein handelsüblicher Solarwärmeträger auf Basis von 1,2-Propylenglykol, bestehend aus:
a) 47,5 Gew.-% 1,2-Propylenglykol
b) 2,5 Gew.-% Korrosionsinhibitoren
c) 50,0 Gew.-% VE-Wasser
mit folgenden Kenndaten:
Stockpunkt -39°C,
Viskosität 7,0 mm²/s
wurde wie im Beispiel 1 thermisch belastet, wobei folgendes Ergebnis erhalten wurde:
- Aussehen schwarzer Feststoff
- Menge des Rückstandes 17 g (4,3 Gew.-%)
- Viskosität bei 20°C fest
- Löslichkeit im Glykol-Wassergemisch zum Teil, unter starker Trübung

### Beispiel 2

Zusammensetzung des erfindungsgemäßen Wärmeträgers:
a) 35,0 % Triethylenglykol technisch
b) 15,0 % 1,2-Propylenglykol
c) 1,5 % Korrosionsinhibitoren
d) Rest auf 100 Gew.-% VE-Wasser

Kenndaten:
Stockpunkt -30°C,
Viskosität 7,2 mm²/s bei 20°C.

Dieser Wärmeträger wurde wie in Beispiel 1 thermisch belastet und danach wie folgt bewertet:
- Aussehen dunkle Flüssigkeit
- Menge des Rückstandes 184,8 g (46,2 Gew.-%)
- Viskosität bei 20°C 183 mm²/s
- Löslichkeit im Glykol-Wassergemisch löslich, mit Trübung

### Vergleichsbeispiel 2a

Verwendet wurde ein Wärmeträger nach DE-A-195 25 090 bestehend aus:
a) 37,5 Gew.-% 1,2-Propylenglykol
b) 10,0 Gew.-% PEG 200 (Polyethylenglykol 200)
c) 1,75 Gew.-% Korrosionsinhibitoren
d) Rest auf 100 Gew.-% VE-Wasser

Kenndaten:
Stockpunkt: -35°C
Viskosität bei 20°C 6,5 mm²/s

Ergebnis nach themischer Belastung wie in Beispiel 1:
- Aussehen schwarzer, zäher Belag
- Menge des Rückstandes 33,1 g (8,3 Gew.-%)
- Viskosität bei 20°C nicht meßbar (> 1000 mm²/s)
- Löslichkeit im Glykol-Wassergemisch teilweise löslich mit schwarzem, zähem Rückstand

### Beispiel 3

Zusammensetzung des erfindungsgemäßen Wärmeträgers:
a) 20 Gew.-% Ethylenglykol (Ethandiol)
b) 10 Gew.-% Triethylenglykol
c) 20 Gew.-% Tetraethylenglykol
d) 3 % Korrosionsinhibitoren
e) Rest auf 100 Gew.-% VE-Wasser

Kenndaten:
Stockpunkt -31°C,
Viskosität bei 20°C 6,3 mm²/s

Thermische Belastung wie im Beispiel 1 ergibt folgendes Resultat:
- Aussehen dunkle Flüssigkeit
- Menge des Rückstandes 180 g (45,0 Gew.-%)
- Viskosität bei 20°C 118 mm²/s
- Löslichkeit im Glykol-Wassergemisch löslich mit leichter Trübung

### Vergleichsbeispiel 3a

Verwendet wurde ein handelsüblicher Wärmeträger auf Basis von Ethylenglykol mit folgender Zusammensetzung:
a) 45,0 % Ethylenglykol
b) 3 % Korrosionsinhibitoren
c) 47 Gew.-% VE-Wasser

Kenndaten:
Stockpunkt -42°C
Viskosität bei 20°C 4,1 mm²/s

Ergebnis der thermischen Belastung nach Beispiel 1:
- Aussehen schwarzer, fester Rückstand
- Menge des Rückstandes 32 g (8,0 Gew.-%)
- Viskosität bei 20°C fest
- Löslichkeit im Glykol-Wassergemisch trüb löslich

## Patentansprüche

1. Wärmeträgerkonzentrat für Solaranlagen, enthaltend
a) 45 bis 98 Gew.-% Triethylenglykol,
b) 1 bis 55 Gew.-% 1,2-Propylenglykol und/oder Ethylenglykol, und
c) 1 bis 6 Gew.-% Korrosionsinhibitoren.

2. Wärmeträgerkonzentrat gemäß Anspruch 1, **gekennzeichnet durch** einen Gehalt an Boraten, Silikaten, Mono- oder Dicarbonsäuren, Natriumbenzoat, Benzotriazolen, Tolyltriazolen, Nitriten oder Nitraten als Korrosionsinhibitoren.

3. Wärmeträgerkonzentrat gemäß Anspruch 1 und/oder 2, **gekennzeichnet durch** einen Gehalt an Korrosionsinhibitoren von 2 bis 4 Gew.-%.

4. Wärmeträgerkonzentrat nach einem oder mehreren der Ansprüche 1 bis 3, **gekennzeichnet durch** einen Gehalt an Triethylenglykol von 50 bis 95, vorzugsweise 60 bis 90 Gew.-%.

5. Wärmeträgerkonzentrat nach einem oder mehreren der Ansprüche 1 bis 4, **gekennzeichnet durch** einen Gehalt an 1,2-Propylenglykol, Ethylenglykol oder Mischungen dieser Stoffe von 10 bis 45, vorzugsweise 15 bis 30 Gew.-%.

6. Abmischung eines Wärmeträgerkonzentrats nach einem oder mehreren der Ansprüche 1 bis 5 mit Wasser, **gekennzeichnet durch** einen Gehalt von 30 bis 70, bevorzugt 40 bis 60 Gew.-% des Wärmeträgerkonzentrats und Wasser ad 100 Gew.-%.

7. Abmischung nach Anspruch 6, enthaltend
a) 25 bis 30 Gew.-% Triethylenglykol,
b) 20 bis 25 Gew.-% 1,2-Propylenglykol,
c) 1 bis 1,5 Gew.-% Korrosionsinhibitoren, und
d) 45 bis 55 Gew.-% Wasser.

## Claims

1. A concentrate for a heat transfer medium for solar units, comprising
a) from 45 to 98% by weight of triethylene glycol,
b) from 1 to 55% by weight of 1,2-propylene glycol and/or ethylene glycol, and
c) from 1 to 6% by weight of corrosion inhibitors.

2. A concentrate as claimed in claim 1 in which borates, silicates, monocarboxylic or dicarboxylic acids, sodium benzoate, benzotriazoles, tolyltriazoles, nitrites or nitrates are present as corrosion inhibitors.

3. A concentrate as claimed in claim 1 and/or 2, wherein the corrosion inhibitor content is from 2 to 4% by weight.

4. A concentrate as claimed in one or more of claims 1 to 3, wherein the content of triethylene glycol is from 50 to 95% by weight, preferably from 60 to 90% by weight.

5. A concentrate as claimed in one or more of claims 1 to 4, wherein the content of 1,2-propylene glycol, ethylene glycol or a mixture of these compounds is from 10 to 45% by weight, preferably from 15 to 30% by weight.

6. A mixture of a concentrate as claimed in one or more of claims 1 to 5 with water, consisting of from 30 to 70% by weight, preferably from 40 to 60% by weight, of the concentrate and water to 100% by weight.

7. A mixture as claimed in claim 6 comprising
a) from 25 to 30% by weight of triethylene glycol,
b) from 20 to 25% by weight of 1,2-propylene glycol,
c) from 1 to 1.5% by weight of corrosion inhibitors, and
d) from 45 to 55% by weight of water.

## Revendications

1. Concentré de fluide caloporteur pour dispositifs solaires, contenant
a) 45 à 98 % en poids de triéthylèneglycol,
b) 1 à 55 % en poids de 1,2-propylèneglycol et/ou d'éthylèneglycol, et
c) 1 à 6 % en poids d'inhibiteurs de corrosion.

2. Concentré de fluide caloporteur selon la revendication 1, **caractérisé par** une teneur en borates, silicates, acides mono- ou dicarboxyliques, benzoate de sodium, benzotriazoles, tolyltriazoles, nitrites ou nitrates comme inhibiteurs de corrosion.

3. Concentré de fluide caloporteur selon la revendication 1 et/ou 2, **caractérisé par** une teneur en inhibiteurs de corrosion de 2 à 4 % en poids.

4. Concentré de fluide caloporteur selon une ou plusieurs des revendications 1 à 3, **caractérisé par** une teneur en triéthylèneglycol de 50 à 95, de préférence de 60 à 90 % en poids.

5. Concentré de fluide caloporteur selon une ou plusieurs des revendications 1 à 4, **caractérisé par** une teneur en 1,2-propylèneglycol, éthylèneglycol ou des mélanges de ces substances de 10 à 45, de préférence de 15 à 30 % en poids.

6. Mélange d'un concentré de fluide caloporteur selon une ou plusieurs des revendications 1 à 5 avec de l'eau, **caractérisé par** une teneur de 30 à 70, de préférence de 40 à 60 % en poids du concentré de fluide caloporteur et d'eau jusqu'à 100 % en poids.

7. Mélange selon la revendication 6, contenant
a) 25 à 30 % en poids de triéthylèneglycol,
b) 20 à 25 % en poids de 1,2-propylèneglycol,
c) 1 à 1,5 % en poids d'inhibiteurs de corrosion, et
d) 45 à 55 % en poids d'eau.
